## Europäisches Patentamt
## European Patent Office
## Office européen des brevets

(11) Veröffentlichungsnummer: **0 215 004**
**B1**

(12) # EUROPÄISCHE PATENTSCHRIFT

(45) Veröffentlichungstag der Patentschrift:
04.01.89

(51) Int. Cl.⁴: **C 09 D 3/64,** B 27 K 3/50, B 27 K 3/15

(21) Anmeldenummer: 85904803.5

(22) Anmeldetag: 27.09.85

(86) Internationale Anmeldenummer:
PCT/DE 85/00338

(87) Internationale Veröffentlichungsnummer:
WO 86/02373 (24.04.86 Gazette 86/09)

(54) IN ORGANISCHEN LÖSUNGSMITTELN GELÖSTE BINDEMITTELMISCHUNG, VERFAHREN ZU IHRER HERSTELLUNG UND IHRE VERWENDUNG.

(30) Priorität: 10.10.84 DE 3437117

(43) Veröffentlichungstag der Anmeldung:
25.03.87 Patentblatt 87/13

(45) Bekanntmachung des Hinweises auf die Patenterteilung:
04.01.89 Patentblatt 89/1

(84) Benannte Vertragsstaaten:
AT BE CH DE FR GB IT LI NL SE

(56) Entgegenhaltungen:
US-A-3 464 853
US-A-3 470 156

(73) Patentinhaber: BASF Lacke + Farben Aktiengesellschaft, Postfach 61 23, D-4400 Münster (DE)

(72) Erfinder: KNITTLER, Herbert, Rothenkrugerstrasse 18, D-5000 Köln 30 (DE)
Erfinder: WEBER, Bodo, Nobelstrasse 16, D-5205 St. Augustin 3 (DE)

## Beschreibung

Die Erfindung betrifft eine Bindemittelmischung, enthaltend ein Sojaalkydharz, eine Ölkomponente und aliphatisches Lösungsmittel.

In organischen Lösungsmitteln gelöste Bindemittelmischungen auf Basis eines mittelöligen Sojaalkydharzes werden z. B. als Holzlasur zum Schutz des Holzes eingesetzt. Zusammen mit Feuchtigkeit setzt kurzwelliges UV-Licht die Oberfläche eines geschlagenen Holzstammes zu Abbauprodukten um. Lignin wird abgebaut, und parallel dazu finden biologische Vorgänge statt, es tritt z. B. Befall des Holzes durch Schimmelpilze ein. Nach einer Verfärbung wird eine Zerstörung der Holzoberfläche unter dem Anstrich eingeleitet.

Der für die Holzoberfläche gefährlichste Wellenlängenbereich zwischen 290 und 340 nm muß möglichst vollständig absorbiert und somit unschädlich gemacht werden. UV-Strahlung ist nicht nur für das Holz, sondern auch für den Lackfilm gefährlich, da sie Veränderungen im Film, vor allem Vergilbung, Versprödung und Rißbildung verursachen kann. Ein normaler Lack ist also selbst mehr oder weniger empfindlich gegenüber der UV-Strahlung und bedarf selbst eines Schutzes. Üblicherweise werden Klarlacken und Lasuren chemische Verbindungen zugesetzt, die den schädlichen UV-Einfluß hemmen oder ganz verhindern.

Derartige chemische Verbindungen sind seit vielen Jahren als UV-Absorber in großer Zahl bekannt. Doch ist die Zahl für die praktische Anwendung begrenzt, da eine ganze Reihe von Forderungen erfüllt sein müssen, um zu einer erfolgreichen Schutzwirkung in einem Lack zu kommen. Eine Übersicht über verwendete UV-Absorber gibt H. Kittel in "Lehrbuch der Lacke und Beschichtungen", Band III, Verlag W.A. Colomb, Berlin-Oberschwandorf, 1976, Seiten 365-375. So sollte der Lack nach Möglichkeit durch den UV-Absorber nicht in seinen chemischen und mechanischen Qualitäten beeinträchtigt werden. Der UV-Absorber sollte möglichst billig, geruchsschwach, ungiftig, chemisch stabil, leicht einarbeitbar und farbtonbeständig sein. Weiterhin sollte er selbst gegen elektromagnetische Strahlung ausreichend beständig sein, damit er seine Wirksamkeit lange beibehält. Selbstverständlich muß der UV-Absorber mit den Lackkomponenten verträglich und in den verwendeten Lösungsmitteln gut löslich sein. Der UV-Absorber darf aus dem Lack bei verschiedenen Einflüssen, wie Wärme, Kälte und Feuchtigkeit, nicht ausgeschieden werden, beispielsweise durch Schmelzen, Auskristallisieren oder Verdunsten. Um eine bessere Wirksamkeit zu gewährleisten, sollte er sich an der Oberfläche des Lackfilms konzentrieren.

Aus der US-A-3 407 156 ist eine Überzugszusammensetzung für die Verwendung als Holzanstrichmittel bekannt, die ein leinölmodifiziertes Alkydharz und ein substituiertes Benzophenonderivat als UV-Absorptionsmittel enthält.

Bisher gibt es keine UV-Absorber, die alle die zuvor genannten Anforderungen erfüllen; der Einsatz von UV-Absorbern ist sogar in vielen Fällen mit großen Nachteilen verbunden. Über das Verhalten von UV-Absorbern in transparenten Holzlacken liegt eine Veröffentlichung von J.R. Kiefer in J. Paint Tech. 39, Nr. 515 (1967), mit dem Titel "UV-Absorbers in Clear Coatings for Wood" vor. Dabei zeigt sich, daß die Wirkungsweise eines UV-Absorbers nicht einmal in dem begrenzten Bereich der Holzlacke vorausgesagt werden kann, sondern erprobt werden muß.

Holz gehört zu den am meisten UV-Schutz bedürftigen Werkstoffen. Die Wirkung eines UV-Absorbers ist auf jedem Holz anders und kann auf manchen Holzarten sehr schlecht sein. Bei Verwendung von UV-Absorbern können sich unter Umständen in flüssigem Lack Veränderungen, wie z. B. Viskositätsänderungen, bemerkbar machen.

Um zu einem guten Schutz des Holzes vor UV-Licht zu kommen, reicht der Einsatz von UV-Stabilisatoren herkömmlicher Art nicht, da die Haltbarkeit der UV-Absorber nicht sehr gut ist. Oft erfolgt eine Sublimierung der Stabilisatoren aus dem Lasurfilm, womit natürlich deren Wirksamkeit verlorengeht. Des weiteren werden transparente Eisenoxide zur Transmissionsminderung eingesetzt.

Aus der US-A-3 464 853 ist ein Verfahren zur Behandlung von Holz bekannt, bei dem dieses mittels einer Zusammensetzung, die 1 Teil eines Sojaalkydharzes, 1 bis 2 Teile Sojabohnenöl und 3 bis 8 Teile Alkohol enthält, imprägniert wird. Nach der Imprägnierung wird schließlich noch eingebrannt. Die aus der US-Patentschrift bekannten Zusammensetzungen haben den Nachteil, daß nach kurzer Standzeit eine Phasentrennung auftritt. Es findet sich kein Hinweis in der US-A-3 464 853, daß die beschriebenen Zusammensetzungen als lufttrocknende Holzanstrichmittel verwendet werden können.

Es besteht der dringende Wunsch nach einer Lasur, die als rationelles Eintopfsystem aufgebaut ist und gleichzeitig einen wirksamen Schutz vor UV-Strahlung bietet. Dabei wäre von Vorteil, die Reduzierung der UV-Durchlässigkeit bei Lasuren durch geeignete Bindemittelkombinationen ohne UVabsorbierende Zusätze zu erreichen, da diese hinsichtlich ihrer Haltbarkeit als ungünstig angesehen werden können. Durch den Verzicht auf UV-Absorber bleibt eine Lasur länger wetterfest.

Die Aufgabe wird erfindungsgemäß durch eine Bindemittelmischung der eingangs genannten Art gelöst, die dadurch gekennzeichnet ist, daß sie

A) 20-30 Gew.-% eines mittelöligen Sojaalkydharzes mit einem Ölanteil von 40-50 Gew.-%,
B) 10-20 Gew.-% Sojastandöl,
C) 45-65 Gew.-% aliphatisches Lösungsmittel und
D) 3-15 Gew.-% aromatisches und/oder aliphatisch-aromatisches Lösungsmittel,

wobei die Summe von A) bis D) 100 Gew.-% beträgt, sowie gegebenenfalls Pigmente und übliche Additive enthält.

Normalerweise sind Sojastandöl und mittelölige Alkydharze unverträglich. Eine einfache Mischung oder das Verkochen dieser Komponenten führt üblicherweise über eine starke Trübung zum Eindicken bzw. zu Ausfällungen. Erst durch die in dem obengenannten Mengen- und Verdünnungsverhältnis auftretende Kombination des Sojaalkydharzes mit dem sonst unverträglichen Sojastandöl tritt eine stabile Bindemittelkombination auf. Diese homogene, lagerstabile Mischung führt durch die Feinteilung der Bindemittel in niedermolekularer und höhermolekularer Form zu besonders festen und dauerelastischen Überzügen, wobei durch diffuse Lichtbrechung an nicht sichtbaren Teilchen eine UV-Transmissionsmischung um etwa 50 % erreicht wird.

Jedes Ausgangsbindemittel für sich allein führt zu einer UV-Transmission von mehr als 90 %.

Die Reduzierung der UV-Absorption tritt nicht nur in flüssiger Phase, sondern auch im opalisierend (milchig) auftrocknenden Film auf. Der Effekt wird nicht erzielt, wenn man hochölige Alkydharze oder anstelle von Sojastandöl das gebräuchlichere Leinölstandöl einsetzt. Des weiteren sind die Verdünnung mit einem aromatischen und/oder aliphatisch-aromatischen Lösungsmittel sowie die Einhaltung der obengenannten Mengen- und Verdünnungsverhältnisse zur Erzielung des gewissen Unverträglichkeitseffektes zwingend.

Mit dem Vorteil der 50 %-igen Transmissionsminderung ist ein Mattierungseffekt bei der erfindungsgemäßen Bindemittelmischung verbunden. Es werden folglich keine Mattierungsmittel mehr benötigt, und besonders vorteilhaft ist die Gleichmäßigkeit der Mattierung, die durch Zugabe von Mattierungsmitteln praktisch nicht erreicht werden kann. Als aliphatisch-aromatisches Lösungsmittel ist ein Gemisch aus z. B. Ethylbenzol, Xylol und Toluol vorteilhaft.

Der stabile Unverträglichkeitseffekt und die damit verbundenen Vorteile der 50 %-igen Transmissionsminderung und des Mattierungseffektes werden bei der erfindungsgemäßen Bindemittelmischung auch erzielt, wenn bis zu 50 Gew.-% des Sojaalkydharzes durch ein mit einem linolsäurereichen Fettsäuregemisch modifiziertes, thixotropes, mittelöliges Alkydharz ersetzt werden. Das zur Modifizierung verwendete Fettsäuregemisch kann vorteilhafterweise aus etwa 60 Gew.-%

Linolsäure, 16 Gew.-% gesättigter Fettsäure, 21 % Ölsäure, 3 % höheren Fettsäuren und einem geringen Anteil an Linolensäure bestehen und ist als Handelsprodukt unter der Bezeichnung Juvandolfettsäure erhältlich. Die Erfindung betrifft also auch eine Bindemittelmischung, enthaltend ein Sojaalkydharz, eine Ölkomponente und aliphatisches Lösungsmittel, die dadurch gekennzeichnet ist, daß sie

A) 20-30 Gew.-% eines Gemisches aus einem mittelöligen Sojaalkydharz mit einem Ölanteil von 40-50 Gew.-% und aus einem mit einem linolsäurereichen Fettsäuregemisch modifizierten, thixotropen mittelöligen Alkydharz, wobei letzteres bis zu 50 Gew.-% des Gewichtes der Mischung ausmacht,
B) 10-20 Gew.-% Sojastandöl,
C) 45-65 Gew.-% aliphatisches Lösungsmittel und
D) 3-15 Gew.-% aromatisches und/oder aliphatisch-aromatisches Lösungsmittel,

wobei die Summe von A) bis D) 100 Gew.-% beträgt, sowie gegebenenfalls Pigmente und übliche Additive enthält.

Die Erfindung betrifft auch ein Verfahren zur Herstellung der Bindemittelmischung nach Anspruch 1, das dadurch gekennzeichnet ist, daß 20-30 Gew.-% eines mittelöligen Sojaalkydharzes mit einem Ölanteil von 40-50 Gew.-% in einem aliphatischen Lösungsmittel vorgelegt und gegebenenfalls erwärmt werden und getrennt davon 10-20 Gew.-% des in einem aliphatischen Lösungsmittel gelösten Sojastandöls mit einem aromatischen und/oder aliphatisch-aromatischen Lösungsmittel auf einen Feststoffgehalt von 25-35 Gew.-% verdünnt werden, wobei 45-65 Gew.-% aliphatisches und 3-15 Gew.-% aromatisches und/oder aliphatischaromatischen Lösungsmittel verwendet werden, und anschließend die verdünnte Sojastandöllösung unter Rühren der Alkydharzlösung zugegeben wird.

Nachfolgend wird die Erfindung anhand von Beispielen erläutert:

**Beispiel 1**

47 Gew.-Teile einer 44,5 %-igen Lösung eines Sojaalkydharzes aus 47,0 Gew.-% Sojafettsäure, 32,0 Gew.-% phthalsäureanhydrid und 21,0 Gew.-% Glycerin in Mineralölterpentin werden in einem Mischbehälter vorgelegt. In einem getrennten Behälter werden 15 Teile einer 80 %-igen Lösung von Sojastandöl in einer Petroletherfraktion mit Siedebereich von 180 - 210°C mit 7 Teilen eines Gemisches aus Ethylbenzol und Xylol und 14 Gew.-Teilen einer Petroletherfraktion vom Siedepunkt 145 - 200°C verdünnt. Anschließend wird die Sojastandöllösung der Sojaalkydharzlösung unter Rühren zugegeben. Im Anschluß daran werden 12 Gew.-Teile Petrolether mit dem Siedebereich 180 - 210°C, 1,0 Gew.-Teile Mangannaphthenat, 1,5 Gew.-Teile Calciumnaphthenat, 0,3 Gew.-Teile Kobaltoctoat, 0,7 Gew.-Teile Zirkonoctoat sowie 1,0 Gew.-Teile Butyraldoxim zugegeben. Zum Schluß wird die gewünschte Viskosität mittels hochsiedendem Petrolether eingestellt.

**Beispiel 2**

25 Gew.-Teile einer 44,5 %-igen Lösung eines Sojaalkydharzes aus 47,0 Gew.-% Sojafettsäure, 32,0 Gew.-% Phthalsäureanhydrid und 21,0 Gew.-% Glycerin in Mineralölterpentin werden zusammen mit 22 Gew.-Teilen einer 40 %-igen Lösung eines Alkydharzes aus 54,0 Gew.-% eines linolsäurereichen Fettsäuregemisches (Handelsname Juvandolfettsäure), 16,0 Gew.-% Phtalsäureanhydrid, 27 Gew.-Teile Pentaerythrit und 3 Gew.-% eines thixotropierenden Polyamids in Petrolether mit dem Siedebereich 180 bis 210°C in einem Mischbehälter vorgelegt. In einem getrennten Behälter werden 15 Teile einer 80 %-igen Lösung von Sojastandöl in einer Petroletherfraktion mit dem Siedebereich von 180 - 210°C mit 7 Teilen eines Gemisches von Ethylbenzol und Xylol und 14 Gew.-Teilen einer Petroletherfraktion vom Siedepunkt 145 - 200°C verdünnt. Die Sojastandöllösung wird dann unter Rühren der Alkydharzlösung zugegeben. Anschließend werden 12 Gew.-Teile Petrolether mit dem Siedebereich 180 - 210°C, 1,0 Gew.-Teile Mangannaphthenat, 1,5 Gew.-Teile Calciumnaphthenat, 0,3 Gew.-Teile Kobaltoctoat, 0,7 Gew.-Teile Zirkonoctoat sowie 1,0 Gew.-Teile Butyraldoxim zugegeben. Zum Schluß wird die gewünschte Viskosität mittels hochsiedendem Petrolether eingestellt.

**Vergleichsbeispiel**

62 Teile einer 44,5 %-igen Lösungs eines Sojaalkydharzes aus 47,0 Gew-.-% Sojafettsäure, 32,0 Gew.-% Phthalsäureanhydrid und 21,0 Gew.-% Glycerin werden mit 7 Gew.-Teilen eines Gemisches aus Ethylbenzol und Xylol und 14 Gew.-Teilen einer Petroletherfraktion vom Siedebereich 145 - 200°C verdünnt. Dann werden 12 Gew.-Teile Petrolether mit dem Siedebereich 180 - 200°C, 1,0 Gew.-Teile Mangannaphthenat, 1,5 Gew.-Teile Calciumnaphthenat, 0,3 Gew.-Teile Kobaltoctoat, 0,7 Gew.-Teile Zirkonoctoat sowie 1,0 Gew.-Teile Butyraldoxim zugegeben. Zum Schluß wird die gewünschte Viskosität mittels Petrolether vom Siedebereich 180 - 210°C eingestellt.

Die Überzugsmittel aus den Beispielen und dem Vergleichsbeispiel werden auf Holz gestrichen und mehrere Monate lang bewittert. Langzeitbewitterungen und Untersuchungen zum Alterungsverhalten im Wechselklima führen zu dem Ergebnis, daß das Holz, das mit dem im Vergleichsbeispiel dargestellten Bindemittel überzogen ist, durch die Witterungseinflüsse wesentlich stärker angegriffen wird.

**Patentansprüche**

1. Bindemittelmischung, enthaltend ein Sojaalkydharz, eine Ölkomponente und aliphatisches Lösungsmittel, dadurch gekennzeichnet, daß sie

A)  20-30 Gew.-% eines mittelöligen Sojaalkydharzes mit einem Ölanteil von 40-50 Gew.-%,
B)  10-20 Gew.-% Sojastandöl,
C)  45-65 Gew.-% aliphatisches Lösungsmittel und
D)  3-15 Gew.-% aromatisches und/oder aliphatisch- aromatisches Lösungsmittel,

wobei die Summe von A) bis D) 100 Gew % beträgt, sowie gegebenenfalls Pigmente und übliche Additive enthält.

2. Bindemittelmischung, enthaltend ein Sojaalkydharz, eine Ölkomponente und aliphatisches Lösungsmittel, dadurch gekennzeichnet, daß sie

A)  20-30 Gew.-% eines Gemisches aus einem mittelöligen Sojaalkydharz mit einem Ölanteil von 40-50 Gew.-% und aus einem mit einem linolsäurereichen Fettsäuregemisch modifizierten, thixotropen mittelöligen Alkydharz, wobei letzteres bis zu 50 Gew.-% des Gewichtes der Mischung ausmacht,
B)  10-20 Gew.-% Sojastandöl,
C)  45-65 Gew.-% aliphatisches Lösungsmittel und
D)  3-15 Gew.-% aromatisches und/oder aliphatisch-aromatisches Lösungsmittel,

wobei die Summe von A) bis D) 100 Gew.-% beträgt, sowie gegebenenfalls Pigmente und übliche Additive enthält.

3. Verfahren zur Herstellung der Bindemittelmischung nach Anspruch 1, dadurch gekennzeichnet, daß 20-30 Gew.-% des mittelöligen Sojaalkydharzes mit einem Ölanteil von 40-50 Gew.-% in einem aliphatischen Lösungsmittel vorgelegt und gegebenenfalls erwärmt werden und getrennt davon 10-20 Gew.-% Sojastandöl in einem aliphatischen Lösungsmittel mit einem Gemisch aus einem aromatischen und/oder aliphatisch-aromatischen Lösungsmittel und einem aliphatischen Lösungsmittel auf einen Feststoffgehalt von 25-35 Gew.-% verdünnt werden, wobei 45-65 Gew.-% aliphatisches und 3-15 Gew.-% aromatisches und/oder aliphatisch-aromatisches Lösungsmittel verwendet werden, und anschließend die verdünnte Sojastandöllösung unter Rühren der Alydharzlösung zugegeben wird.

4. Verwendung der Bindemittelmischung nach Anspruch 1 und 2 als Holzlasur.

## Claims

1. A mixture of binders containing a soya alkyd resin, an oil component and an aliphatic solvent which comprises

A) 20-30 % by weight of a middle-oil soya alkyd resin with an oil content of 40-50 % by weight,
B) 10-20 % by weight of soya stand oil,
C) 45-65 % by weight of an aliphatic solvent and
D) 3-15 % by weight of an aromatic and/or aliphatic- aromatic solvent,

the total of A) to D) being 100 % by weight, in addition to, where appropriate, pigments and conventional additives.

2. A mixture of binders containing a soya alkyd resin, an oil component and an aliphatic solvent, which comprises

A) 20-30 % by weight of a mixture of middle-oil soya alkyd resin with an oil content of 40-50 % by weight and a thixotropic middle-oil alkyd resin modified with a fatty acid mixture rich in lineolic acid, the middle-oil alkyd resin being present in up to 50 % by weight of the weight of the mixture,
B) 10-20 % by weight of soya stand oil,
C) 45-65 % by weight of an aliphatic solvent and
D) 3-15 % by weight of an aromatic and/or aliphatic-aromatic solvent,

the total of A) to D) being 100 % by weight, in addition to, where appropriate pigments and conventional additives.

3. A process for the production of the mixture of binders according to claim 1, in which 20-30 % by weight of a middle-oil soya alkyd resin with an oil content of 40-50 % by weight are initially taken in an aliphatic solvent and optionally heated, and 10-20 % by weight of the soya stand oil is dissolved in a separate step in an aliphatic solvent and diluted with a mixture of an aromatic and/or aliphatic-aromatic solvent and an aliphatic solvent to a solids content of 25-35 % by weight, 45-65 % by weight of an aliphatic and 3-15 % by weight of an aromatic and/or aliphatic-aromatic solvent being used and subsequently the diluted soya stand oil solution is added to the alkyd resin solution with stirring.

4. Use of the mixture of binders according to claims 1 and 2 as wood varnish.

## Revendications

1. Mélange de liants renfermant une résine alkyde de soja, un composant huileux et un solvant aliphatique, caractérisé par le fait qu'il renferme:

A) 20-30 % en poids d'une résine alkyde de soja à teneur moyenne en huile, présentant une fraction huileuse de 40-50 % en poids;
B) 10-20 % en poids de standolie d'huile de soja;
C) 45-65 % en poids de solvant aliphatique ; et
D) 3-15 % en poids de solvant aromatique et/ou aliphatique-aromatique,

la somme de A) à D) s'élevant à 100 % en poids, ainsi que, le cas échéant, des pigments et des additifs habituels.

2. Mélange de liants renfermant une résine alkyde de soja, un composant huileux et un solvant aliphatique, caractérisé par le fait qu'il renferme:

A) 20-30 % en poids d'un mélange d'une résine alkyde de soja à teneur moyenne en huile, présentant une fraction huileuse de 40-50 %, et une résine alkyde, à teneur moyenne en huile, thixotrope, modifiée par un mélange d'acide gras riche en acide linoléique, cette dernière constituant jusqu'à 50 % en poids du poids du mélange;
B) 10-20 % en poids de standolie d'huile de soja;
C) 45-65 % en poids de solvant aliphatique ; et
D) 3-15 % en poids de solvant aromatique et/ou aliphatique-aromatique,

la somme de A) à D) s'élevant à 100 % en poids, ainsi que, le cas échéant, des pigments et des additifs habituels.

3. Procédé de fabrication du mélange de liants tel que défini à la revendication 1, caractérisé par le fait qu'on place dans un solvant aliphatique et, le cas échéant, on chauffe, 20-30 % en poids de la résine alkyde de soja à teneur moyenne en huile, présentant une fraction huileuse de 40-50 % en poids, et, d'une façon séparée, on dilue 10-20 % en poids de standolie d'huile de soja dans un solvant aliphatique avec un mélange d'un solvant aromatique et/ou aliphatique-aromatique et d'un solvant aliphatique, sur la base d'une teneur en matières solides de 25-35 % en poids, 45-65 % en poids de solvant aliphatique et 3-15 % en poids de solvant aromatique et/ou aliphatique-aromatique étant utilisés, puis on ajoute la solution diluée de standolie d'huile de soja sous agitation à la solution de résine alkyde.

4. Utilisation du mélange de liants tel que défini aux revendications 1 et 2 comme lasure.